# EUROPÄISCHE PATENTSCHRIFT

(11) **EP 0 814 724 B1**
(45) Veröffentlichungstag und Bekanntmachung des Hinweises auf die Patenterteilung: **16.09.1998**
(21) Anmeldenummer: 96905657.1
(22) Anmeldetag: 15.03.1996
(51) Int. Cl.: A61C 8/00

(54) **VERBINDUNGSANORDNUNG EINES DENTALIMPLANTATS MIT EINEM KONUS-SEKUNDÄRTEIL**
DEVICE FOR CONNECTING A DENTAL IMPLANT TO A CONICAL SECONDARY ELEMENT
ATTACHE D'UN IMPLANT DENTAIRE DOTE D'UNE PARTIE SECONDAIRE CONIQUE

(30) Priorität: 20.03.1995 CH 783/95
(43) Veröffentlichungstag der Anmeldung: 07.01.1998
(73) Patentinhaber: INSTITUT STRAUMANN AG, 4437 Waldenburg (CH)
(72) Erfinder: SUTTER, Franz, CH-4435 Niederdorf (CH); SUTTER, Francis, J., CH-4434 Hölstein (CH)
(74) Vertreter: Ullrich, Gerhard, Dr.
(86) Internationale Anmeldenummer: CH9600100
(87) Internationale Veröffentlichungsnummer: WO9629020

(56) Entgegenhaltungen:
- US-A- 2 258 207
- US-A- 5 006 069
- US-A- 5 104 318
- US-A- 5 246 370
- Book no. , 1994, 'ORALE IMPLANTOLOGIE', SCHROEDER A. GEORG THIEME VERLAG, STUTTGART

## Beschreibung

Die vorliegende Erfindung betrifft eine Verbindungsanordnung eines Dentalimplantats und einem damit verbundenen Konus-Sekundärteil gemäss dem Oberbegriff des unabhängigen Patentanspruchs 1, verwendbar zur Abdrucknahme, Herstellung des Meistermodells oder Befestigung einer Suprakonstruktion auf dem im Kieferknochen eingesetzten Implantat.

Ständige Weiterentwicklungen in der Werkstofforschung, der Konstruktion, bei den Instrumentarien und Implantiertechniken erbrachten eine stetige Verbesserung der Erfolgsquote, so dass sich immer mehr Menschen mit fehlenden Zähnen oder auch nicht mehr vorhandenen Zahnwurzeln entschliessen, Implantate einsetzen zu lassen. Hierdurch können die betroffenen Personen ihre Lebensqualität verbessern. Nach einer Einheilphase des Implantats bzw. mehrerer eingesetzter Implantate im Kieferknochen muss die intraorale Geometrie mittels einer Abdrucknahme originalgetreu auf ein Meistermodell übertragen werden. Auf dem Meistermodell erfolgt dann durch den Zahntechniker die Herstellung der Zahnprothese bzw. des künstlichen Einzelzahnes, welche schliesslich als Suprakonstruktion im Mund des Patienten auf die vorhandenen Implantate aufgesetzt werden. Zur Gewährleistung einer einwandfreien, langjährigen Funktion dieser Suprakonstruktion müssen sämtliche Arbeiten sowie auch bereits die Implantate und weiteren Systemteile hochpräzise ausgeführt sein. Die hiesige Erfindung befasst sich mit der konstruktiven Verbesserung der Verbindungsanordnung zwischen einem Implantat und einem in dieses einsetzbaren Sekundärteil. Je nach vorhandenen Gegebenheiten kommt bei den hier in Rede stehenden zweiteiligen Implantaten - bestehend aus dem Primärteil, dem eigentlichen Implantat, und dem Sekundärteil - die Verwendung eines vielkantigen Sekundärteils, z.B. als Octa-Sekundärteil bekannt, oder eines Konus-Sekundärteils in Betracht. Speziell der letztgenannte Typ ist Gegenstand der vorliegenden Erfindung.

### Stand der Technik

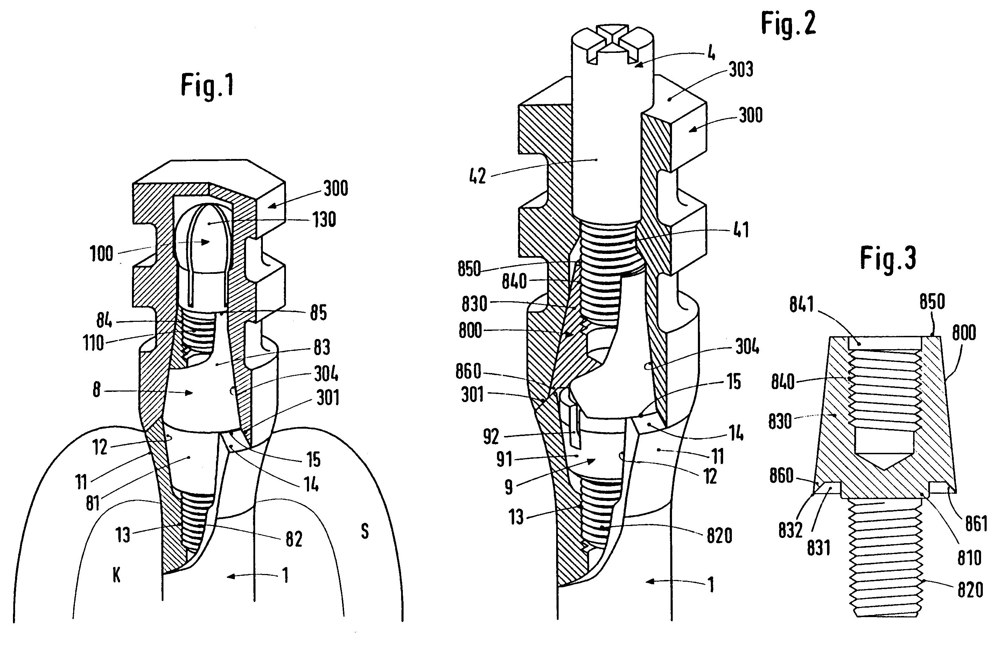

Die Figur 1 veranschaulicht eine herkömmliche Verbindungsanordnung zwischen einem Implantat und einem Konus-Sekundärteil, wie sie beispielsweise von Schroeder, A. u.a. in: Orale Implantologie. Georg Thieme Verlag Stuttgart, 2. Aufl., 1994, S. 199ff., beschrieben wird. Zur Ergänzung der Darstellung sind ein neuartiger Steckanker sowie eine dazugehörige Abdruckkappe mit vorgesehen, welche jedoch Inhalt einer anderen Patentanmeldung sind, aber im Zusammenhang mit der hier betroffenen Verbindungsanordnung besonders vorteilhaft kombiniert angewendet werden können.

### Figur 1

Im Ober- oder Unterkieferknochen K ist das Implantat 1 intraossal und transgingival eingesetzt, so dass der Implantatkopf 11 die Schleimhaut S durchdringt. Nach der 3-4 monatigen Einheilphase des Implantats 1 wurde die nun nicht mehr sichtbare Einheilkappe entfernt und das Konus-Sekundärteil 8 in situ in das Implantat 1 eingeschraubt. Damit sitzt der Basiskonus 81 des Konus-Sekundärteils 8 im Implantatkonus 12 und das Gewindesegment 82 des Konus-Sekundärteils 8 greift in die Gewindebohrung 13 des Implantats 1 ein. Die Gewindebohrung 13 erstreckt sich aus dem Raum des Implantatkonus 12, von dessen Bodenfläche axial abwärts. Der Konuspfeiler 83 des Konus-Sekundärteils 8 überragt die Implantatschulter 14. Der Übergang zwischen dem Basiskonus 81 und dem Konuspfeiler 83 befindet sich in Höhe der Innenkante 15 der Implantatschulter 14. Entsprechend dem Implantatkonus 12 verjüngt sich der Basiskonus 81 abwärts, während sich der Konuspfeiler 83 aufwärts verjüngt. Von der Konuspfeilerschulter 85 erstreckt sich eine axiale, sacklochförmige Gewindebohrung 84, in welche das Gewindesegment 110 eines Steckankers 100 eingeschraubt ist. Zum Zwecke der Abdrucknahme ist über den Steckanker 100 und den Konuspfeiler 83 eine Abdruckkappe 300 gesteckt, wobei die zur Implantatschulter 14 komplementäre Gegenschulter 301 der Abdruckkappe 300 vollständig und fugenlos auf der Implantatschulter 14 aufsitzt. Der Klemmkopf 130 des Steckankers 100 bildet mit der Abdruckkappe 300 eine Steckverbindung, so dass die Gegenschulter 301 quasi auf die Implantatschulter 14 aufgepresst wird. Die Implantatschulter 14 besitzt eine nach aussen abfallende Abschrägung von 45°, gemessen zur Horizontalen. Eine entsprechend komplementäre Abschrägung ist an der Gegenschulter 301 vorgesehen. Zur Aufnahme des Konus-Sekundärteils 8 weist die Abdruckkappe 300 eine Konusbohrung 304 auf, die sich als sacklochförmige Kavität zur Aufnahme des Steckankers 100 fortsetzt.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Text nicht erläutert, so wird auf deren Erwähnung in vorangehenden Figurenbeschreibungen Bezug genommen.

Im Streben nach Vollkommenheit vermag die bisherige Verbindungsanordnung zwischen dem Implantat 1 und dem darin eingesetzten Konus-Sekundärteil 8 sowie der dann aufgesteckten Abdruckkappe 300 bzw. der später aufgesetzten Kronenkappe nicht endgültig zu befriedigen. Auch die Einfügung einer Zentrierhülse in den Implantatkonus 12 erbrachte noch keine optimale Lösung. Die herkömmlichen Konstruktionen weisen eine Reihe von verbesserungswürdigen Kriterien auf, so insbesondere:
- Der Öffnungswinkel des Implantatkonus 12 beträgt beispielsweise 8° und der Basiskonus 81 besitzt eine entsprechende Konizität, sp dass eine Toleranz von 0,02mm bereits zu einer Axialverschiebung des Konus-Sekundärteils 8 von 0,18mm führt. Diese relativ grosse Axialverschiebung kann unerwünschte Ungenauigkeiten hervorrufen. So ist es nicht möglich, die Dicke der Zementschicht zwischen der Suprakonstruktion bei deren Aufsetzen auf das Implantat 1 und dem herausragenden Konuspfeiler 83 hochgenau zu definieren.
- Es wäre wünschenswert, die Passgenauigkeit zwischen dem Konuspfeiler 83 und der Abdruckkappe 300 weiter zu erhöhen, so dass auch die später hergestellte Kronenkappe als Basis für den Kronenaufbau noch präziser gestaltet werden könnte.
- Der Konuspfeiler 83 bietet nur eine begrenzte Kontaktoberfläche für die Fixierung des Kronenaufbaus. Eine vergrösserte Kontaktoberfläche würde eine grössere Haftfestigkeit und somit einen stabileren Sitz des Kronenaufbaus auf dem Implantat 1 ermöglichen.
- Die Verteilung der Belastungsmomente bei hoher physiologischer Beanspruchung des Kronenaufbaus, insbesondere bei Lateral- und Schrägbelastung, ist derzeit noch nicht optimal gelöst.
- Bei der Herstellung von abgewinkelten Konus-Sekundärteilen 8 muss man bislang einen erheblichen Aufwand treiben.

Angesichts der Unvollkommenheiten des vorgängig beschriebenen Standes der Technik hat sich die Erfindung die Aufgabe gestellt, eine vielfach verbesserte Verbindungsanordnung zwischen einem Implantat und dem darin eingeschraubten Konus-Sekundärteil 8 sowie der aufgesetzten Abdruckkappe bzw. später aufgebrachten Kronenkappe zu schaffen. Dabei gilt es, die Elemente so weiter zu entwickeln, dass die Präzision der Abdrucknahme, des hergestellten Kronenaufbaus und schliesslich des Sitzes der Krone erhöht werden, sich der Aufwand bei der Fertigung der Elemente aber eher reduzieren lässt. Ferner ist die Kraftverteilung bei extremer Beanspruchung des Kronenaufbaus durch konstruktive Massnahmen günstiger zu gestalten und schliesslich soll eine moderne Steckverbindung vorteilhaft anwendbar sein.

Die Lösung dieser Aufgabe wird durch die kennzeichnenden Merkmale des unabhängigen Patentanspruchs 1 definiert, während sich bevorzugte Ausführungsvarianten aus den abhängigen Ansprüchen ergeben. Das Wesen der Erfindung besteht darin, dass am Konuspfeiler des Konus-Sekundärteils eine radial umlaufende Schulterpartie vorgesehen wird, welche von der Innenkante der Implantatschulter her kreisringförmig und partiell auf der Implantatschulter aufsitzt. Die verbleibende Fläche auf der Implantatschulter wird von einer verschmälerten Gegenschulter der Abdruckkappe bzw. der Kronenkappe belegt. Die Schulterpartie des Konus-Sekundärteils sowie die jeweilige Gegenschulter sind zur Implantatschulter komplementär gestaltet, so dass ein fugenloses Aufsitzen realisierbar ist. Sowohl rotationssymmetrische als auch abgewinkelte Konus-Sekundärteile werden mit der speziell gestalteten Schulterpartie versehen. Die erfindungsgemässen Konus-Sekundärteile sind gleichermassen in Implantate sowie in die bei der Herstellung des Meistermodells verwendeten Manipulierimplantate einsetzbar und bieten gegenüber dem Stand der Technik folgende prinzipiellen Vorteile:
- Die partielle Auflage der Schulterpartie des Konus-Sekundärteils auf der Implantatschulter bewirkt eine Zentrierung des Sekundärteils, wobei Toleranzen eine wesentlich geringere Axialverschiebung verursachen. Folglich erzielt man im gesamten zahntechnischen Arbeitsablauf eine präzisere Gestaltung.
- Durch die Vergrösserung des Aussendurchmessers des Konuspfeilers erhält man eine grössere Kontaktoberfläche und somit eine stabilere Fixierung des aufzementierten Kronenaufbaus.
- Die Abdrucknahme von im Mund des Patienten sitzenden Implantats kann mit einer herkömmlich aufgeschraubten Abdruckkappe, aber auch besonders vorteilhaft mit einer neuestens entwickelten Steckverbindung, erfolgen.
- In der Art der Kronenverbindung besteht bis zum Abschluss der Arbeiten völlige Freizügigkeit. So kann die Kronen- oder Brückenkonstruktion mittels Zementieren, Okklusal- oder Transversalverschraubung bzw. Steckverbindung erfolgen.
- Insbesondere seitliche Belastungen, die auf die Suprakonstruktion einwirken, werden günstiger aufgenommen und bei der Herstellung der Sekundärteile tritt eine Vereinfachung ein.

Im folgenden wird die erfindungsgemässe Verbindungsanordnung unter Bezugnahme auf die beigefügten Zeichnungen detaillierter beschrieben. Dabei zeigen:
- Figur 1:: einen Teilschnitt durch ein enostal gesetztes Dentalimplantat mit herkömmlichem Konus-Sekundärteil (Stand der Technik) sowie mit modernem Steckanker und Abdruckkappe;
- Figur 2:: die Darstellung eines Implantats mit erfindungsgemässem Konus-Sekundärteil, Zentrierhülse und mittels Positionierschraube fixierter Abdruckkappe im Teilschnitt;
- Figur 3:: das Konus-Sekundärteil gemäss Figur 2 in Einzeldarstellung;
- Figur 4:: die Verbindungsanordnung gemäss Figur 2 in abgewinkelter Version;
- Figur 5:: die Verbindungsanordnung gemäss Figur 2, jedoch mittels Steckanker fixierter Abdruckkappe;
- Figur 6:: die Verbindungsanordnung gemäss Figur 5 in abgewinkelter Version;
- Figur 7:: ein Manipulierimplantat mit dem Konus-Sekundärteil gemäss Figur 2 und darin eingeschraubtem Steckanker;
- Figur 8:: die Verbindungsanordnung mit okklusaler Befestigung der fertigen Krone auf dem Implantat und
- Figur 9:: die Verbindungsanordnung mit aufzementierter Befestigung der fertigen Krone auf dem Implantat in abgewinkelter Version.

### Figuren 2 und 3

Die erfindungsgemässe Verbindungsanordnung für die Abdrucknahme besteht im Prinzip aus dem im Kieferknochen eingesetzten Implantat 1, dem darin eingeschraubten Konus-Sekundärteil 800, der im Implantatkonus 12 sitzenden Zentrierhülse 9 und der mittels Positionierschraube 4 aufgeschraubten Abdruckkappe 300.

Der verjüngte, zylindrische Basispfeiler 810 des Konus-Sekundärteils 800 wird von der Zentrierhülse 9 aufgenommen, welche die Hülsenschale 91 mit den Dehnungsschlitzen 92 aufweist. Das Gewindesegment 820 des Konus-Sekundärteils 800 ist in die im Implantat 1 befindliche Gewindebohrung 13 eingeschraubt. Über die Implantatschulter 14 hinaus ragt der Konuspfeiler 830, der zuoberst mit der Konuspfeilerschulter 850 und an der Unterseite mit der Schulterpartie 860 abschliesst. Von der Konuspfeilerschulter 850 aus erstreckt sich eine axiale und sacklochförmige Gewindebohrung 840, welche zur Aufnahme des Gewindesegmentes 41 der Positionierschraube 4 bestimmt ist. An der Unterseite des Konuspfeilers 830 ist eine Auskehlung 831 eingearbeitet, so dass die Schulterpartie 860 entsteht, welche eine sich konisch abwärts öffnende Ringfläche 861 besitzt, die auf die untere Aussenkante 832 des Konuspfeilers 830 zuläuft. Grösse und Neigungswinkel der radial umlaufenden Ringfläche 861 sowie ihr Abstand zur Vertikalachse sind derart bemessen, dass die Schulterpartie 860 auf der innenliegenden Zone der Implantatschulter 14 aufsetzt und die Ringfläche 861 fugenlos mit einem kreisringförmigen Sektor der Implantatschulter 14 zur Anlage kommt. Die Auskehlung 831 ist zumindest so tief in die Unterseite des Konuspfeilers 830 eingearbeitet, dass die Innenkante 15 der Implantatschulter 14 über einen einzuhaltenden Toleranzbereich nicht an die Begrenzung der Auskehlung 831 anstösst. Gegenüber herkömmlichen Konus-Sekundärteilen besitzt das erfindungsgemässe Konus-Sekundärteil 800 einen verdickten, auf die Implantatschulter 14 übergreifenden Konuspfeiler 830.

Äusserlich weist die Abdruckkappe 300 die typische Kontur mit den Rippen 303 auf. Die Besonderheit der Abdruckkappe 300 besteht in der erweiterten Konusbohrung 304, um den verdickten Konuspfeiler 830 aufzunehmen. Zuunterst schliesst die Abdruckkappe 300 mit einer verschmälerten, zur Implantatschulter 14 komplementären Gegenschulter 301 ab, so dass auf der Implantatschulter 14 innenseitig die Ringfläche 861 und aussenseitig die Gegenschulter 301 aufliegen. In an sich bekannter Weise besitzt die Abdruckkappe 300 einen inneren Sitz zur Aufnahme der unteren Partie des Schraubenkopfes 42 der Positionierschraube 4.

Auf der Seite der Konuspfeilerschulter 850 kann man am Austritt der Gewindebohrung 840 eine Ansenkung 841 vorsehen, in welche das zylindrische Schaftsegment eines eventuell eingeschraubten Steckankers partiell eingreift.

### Figur 4

Die Besonderheit dieser Ausführung besteht im Verhältnis zur Figur 2 darin, dass anstelle eines rotationssymmetrischen Konus-Sekundärteils 800, nun ein abgewinkeltes vorgesehen ist. Ein abgewinkeltes Konus-Sekundärteil 800 verwendet man, um die Schräglage eines aufgrund des speziellen Knochenangebotes derartig gesetzten Implantats 1 zu kompensieren. Adäquat zur Abwinkelung des Konus-Sekundärteils 800 sind die Konturen der Ringfläche 861 sowie der Gegenschulter 301 gestaltet, so dass auch bei dieser Version eine fugenfreie Auflage erreicht wird.

### Figur 5

Abweichend zur Figur 2 wird hier anstatt der mittels einer Positionierschraube 4 fixierbaren Abdruckkappe 300, eine oberseitig geschlossene Abdruckkappe neuester Entwicklung, die mit einem Steckanker 100 fixierbar ist, verwendet. Insoweit wird auf die Erläuterung zu Figur 1 Bezug genommen. Das eingesetzte Konus-Sekundärteil 800 entspricht in seiner Konstruktion der Darstellung gemäss Figur 3.

### Figur 6

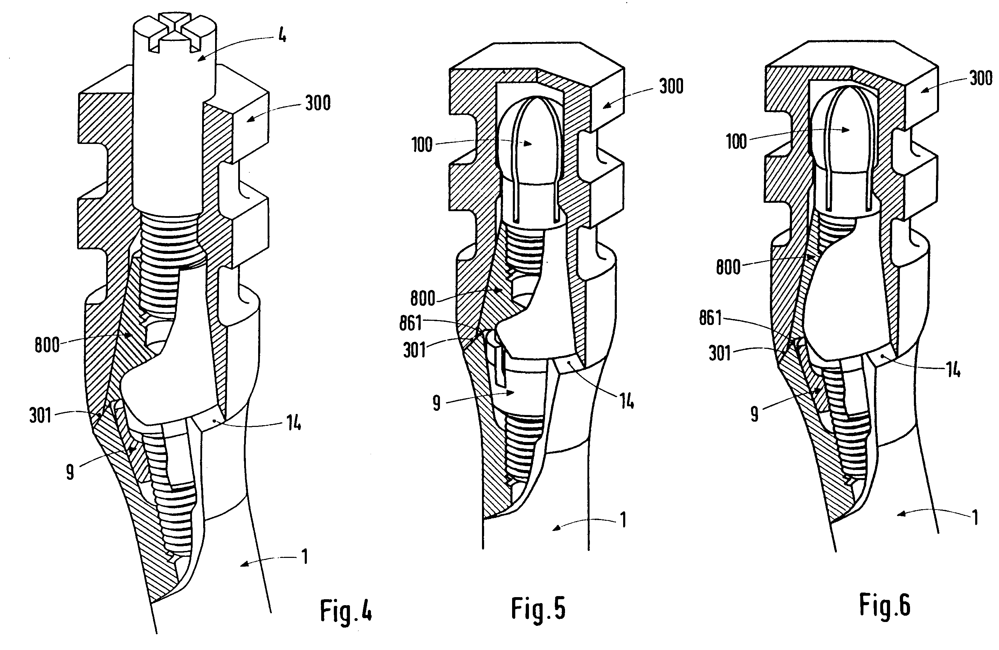

Wie mit der Figur 4 die abgewinkelte Version gegenüber der Figur 2 dargestellt ist, so existiert gleichsam analog zur Figur 5 mit der aufsteckbaren Abdruckkappe 300 eine Variante mit abgewinkeltem Konus-Sekundärteil 800. Entsprechend der Abwinkelung des Konus-Sekundärteils 800 sind auch hier die Konturen der Ringfläche 861 sowie der Gegenschulter 301 der Schräglage anzupassen.

### Figur 7

Nach erfolgter Abdrucknahme, um die geometrische Konstellation aus dem Mund des Patienten zu erhalten, setzt man für die weitere Bearbeitung an den gewonnenen Abdruck ein zum Implantat 1 analoges Manipulierimplantat 7 an. In diesem Zustand ist die Abdruckkappe innerhalb des Abdrucks eingebettet, der seinerseits von einem Abdrucklöffel umschlossen ist. Die Figur zeigt das Manipulierimplantat 7 mit dem daran befindlichen Konus-Sekundärteil 800, in das oberseitig ein Steckanker 100 eingeschraubt ist. Das Manipulierimplantat 7 mit den aufgesetzten Elementen fungiert zunächst als Träger für den Abdruck bei der Herstellung des Meistermodells.

Das Konus-Sekundärteil 800 entspricht der Darstellung gemäss Figur 3 und weist somit die Schulterpartie 860 sowie die Ringfläche 861 auf. Das Manipulierimplantat 7 besitzt in Analogie zum Implantat 1 den Kopf 71 mit der Implantatschulter 74. Am Kopf 71 ist eine axiale, sacklochförmige Gewindebohrung 72 mit der austrittsseitigen, erweiterten Zylinderbohrung 75 vorgesehen. Im zusammengesetzten Zustand greift das Gewindesegment 820 des Konus-Sekundärteils 800 in die Gewindebohrung 72 ein und der Basispfeiler 810 sitzt geführt in der Zylinderbohrung 75. Die Schulterpartie 860 liegt mit ihrer Ringfläche 861 partiell auf einer inneren, kreisringförmigen Zone der Implantatschulter 74 auf. Der Steckanker 100 ist mit seinem Gewindesegment 110 in die Gewindebohrung 840 eingeschraubt, wobei das Schaftsegment 120 des Steckankers 100 ansatzweise in der Ansenkung 841 sitzt. Die hier freie äussere, kreisringförmige Zone auf der Implantatschulter 74 dient zur Auflage der Gegenschulter der Kronenkappe bei der Herstellung der Zahnkrone.

### Figur 8

Die fertige Zahnkrone Zk ist mit dem in das Implantat 1 eingesetzten Konus-Sekundärteil 800 okklusal verschraubt. Hierzu benötigt man eine Okklusalschraube 400, in Form einer Kopfschraube, sowie eine Zugangsbohrung Zu durch den auf den Goldanguss Go aufmodellierten Porzellanüberzug Po und durch die Kronenkappe 500, damit der Zugang zur Gewindebohrung 840 im Konus-Sekundärteil 800 gegeben ist. Auf der Oberseite der Kronenkappe 500 ist eine Ansenkung 530 zur Aufnahme des Kopfes 420 der Okklusalschraube 400 vorgesehen. Ist die Verschraubung hergestellt, verschliesst man die Zugangsbohrung Zu mit einer geeigneten Masse. Diese Zugangsbohrung Zu wird auch für das eventuell notwendige Herausnehmen der Okklusalschraube 400 benötigt.

Wie bereits vorbeschrieben, liegt die Ringfläche 861 der Schulterpartie 860 des Konus-Sekundärteils 800 partiell auf der Implantatschulter 14 auf. Die auf der Implantatschulter 14 verbleibende Fläche wird von der komplementären Gegenschulter 501 der Kronenkappe 500 belegt. Im Verhältnis zum bisher üblichen Ansetzen einer Kronenkappe 500 auf der Implantatschulter 14, steht der Gegenschulter 501 der Kronenkappe 500 hier nur eine Teilfläche auf der Implantatschulter 14 zur Verfügung - ähnlich der Gegenschulter 301 der Abdruckkappe 300.

### Figur 9

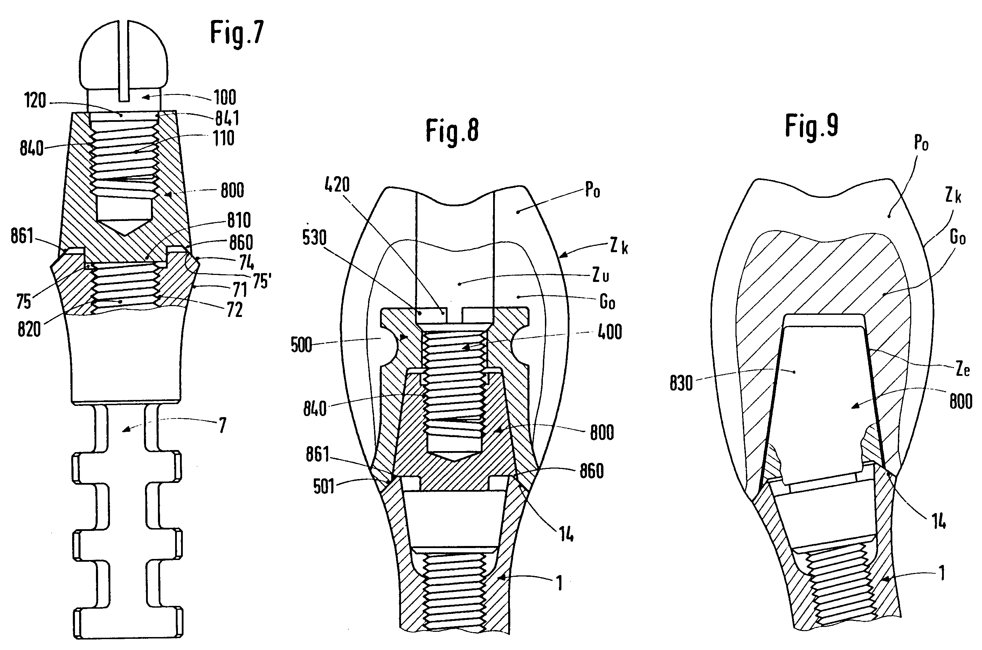

Im Unterschied zur Figur 8 ist hier ein abgewinkeltes Konus-Sekundärteil 800 in das Implantat 1 eingeschraubt. Anstelle der Okklusalverschraubung ist die fertige Zahnkrone Zk mittels einer Zementschicht Ze auf dem vergrösserten Konuspfeiler 830 befestigt, und es wird keine vorgefertigte Kronenkappe benutzt, sondern eine individuell gegossene Metallkrone - z.B. in Form eines Goldangusses Go - vorgesehen.

Zu den vorbeschriebenen Modifikationen an den Elementen der Verbindungsanordnung und zu den bisher aufgezeigten Kombinationsmöglichkeiten sind weitere Variationen hinsichtlich der Gestaltung sowie der Austauschbarkeit realisierbar. Hier ausdrücklich erwähnt seien noch:
- Die Implantatschultern 14 und 74 könnten auch eine andere Abschrägung als 45° besitzen; mit einem entsprechend angepassten Anstellwinkel müssten dann die Ringfläche 861 sowie die Gegenschultern 301 und 501 der Abdruckkappe 300 bzw. der Kronenkappe 500 gefertigt werden.
- Es ist nicht zwingend notwendig, stets die Zentrierhülse 9 zu verwenden; man kann auf diese verzichten. Dann jedoch ist der Basispfeiler 810 in seiner Geometrie konisch, komplementär zum Implantatkonus 12 vorzusehen.
- Die Befestigung der fertigen Zahnkrone Zk auf dem Implantat 14 im Mund des Patienten könnte auch als Steckverbindung unter Verwendung des Steckankers 100 mit entsprechender rastender Kontur im Inneren der Kronenkappe 500 erfolgen. Realisierbar ist auch, die Steckverbindungen durch Umkehr herzustellen, indem die Steckanker 100 abwärts weisend fest in der Abdruckkappe 300 bzw. Kronenkappe 500 fixiert sind und die rastende Kontur sich hingegen im Innern des Konus-Sekundärteils 800 befindet.
- Schliesslich ist es möglich, die Verbindungsanordnung mit der bereits in der parallelen Patentanmeldung beschriebenen Transversalverschraubung zu kombinieren.

## Patentansprüche

1. Verbindungsanordnung eines Dentalimplantats (1) bzw. eines Manipulierimplantats (7) mit einem Konus-Sekundärteil (800), wobei
a) das Implantat (1, 7) am Implantatkopf (11, 71) oberseitig mit einer Implantatschulter (14, 74) abschliesst und im Implantatkopf (11, 71) ein hohler Implantatkonus (12) bzw. eine zylindrische Bohrung (75) vorgesehen ist, von deren Boden sich eine axiale, sacklochförmige Gewindebohrung (13, 72) erstreckt;
b) das Konus-Sekundärteil (800) ein Gewindesegment (820) besitzt, das in die Gewindebohrung (13, 72) eingreift, einen Basispfeiler (810) aufweist, der im Implantatkonus (12) bzw. in der zylindrischen Bohrung (75) sitzt und einen die Implantatschulter (14, 74) überragenden Konuspfeiler (830) hat, **dadurch gekennzeichnet**, dass
c) durch eine an der Unterseite des Konuspfeilers (830) vorhandene Auskehlung (831) eine Schulterpartie (860) mit einer Ringfläche (861) entsteht, die zur Implantatschulter (14, 74) komplementär gestaltet ist, auf die Aussenkante (832) des Konuspfeilers (830) zuläuft und von der Innenkante (15, 75') der Implantatschulter (14, 74) her kreisringförmig und partiell auf der Implantatschulter (14, 74) fugenlos aufsitzt;
d) eine Abdruckkappe (300) bzw. Kronenkappe (500) vorgesehen ist, die zuunterst eine kreisringförmige Gegenschulter (301 bzw. 501) aufweist, welche zur Implantatschulter (14, 74) komplementär gestaltet ist und auf der verbleibenden Fläche der Implantatschulter (14, 74) fugenlose aufsitzt.

2. Verbindungsanordnung nach Anspruch 1, **dadurch gekennzeichnet**, dass die Implantatschulter (14, 74) und somit auch die Ringfläche (861) am Konus-Sekundärteil (800) mit der Horizontalen einen Neigungswinkel ungleich 0° einnehmen.

3. Verbindungsanordnung nach Anspruch 2, **dadurch gekennzeichnet**, dass der Neigungswinkel 45° beträgt.

4. Verbindungsanordnung nach einem der Ansprüche 1 bis 3, **dadurch gekennzeichnet**, dass
a) das Konus-Sekundärteil (800) rotationssymmetrische Gestalt aufweist oder abgewinkelt ist;
b) im Konuspfeiler (830) eine von der Konuspfeilerschulter (850) sich erstreckende, axiale und sacklochförmige Gewindebohrung (840) vorgesehen ist, die zur Aufnahme des Gewindesegments (41, 410 oder 110) einer Positionierschraube (4), einer Okklusalschraube (400) oder eines Steckankers (100) dient und
c) am Eintritt der Gewindebohrung (840) eine Ansenkung (841) zur Aufnahme des Ansatzes des Schaftsegments (120) des Steckankers (100) vorhanden ist.

5. Verbindungsanordnung nach einem der Ansprüche 1 bis 4, **dadurch gekennzeichnet**, dass zur zusätzlichen Zentrierung des Konus-Sekundärteils (800) in den Implantatkonus (12) bzw. in die Zylinderbohrung (75) eine Zentrierhülse (9) eingesetzt wird.

6. Verbindungsanordnung nach einem der Ansprüche 1 bis 5, **dadurch gekennzeichnet**, dass
a) diese für die Abdrucknahme, die Herstellung des Meistermodells und den Aufbau sowie die Fixierung der fertigen Zahnkrone (Zk) auf dem Implantat (1) benutzt wird;
b) man beim Aufbau der Zahnkrone (Zk) anstelle einer vorgefertigten Kronenkappe (500) alternativ eine individuell gegossene Metallkrone vorsieht und
c) zur Fixierung die Verbindungsarten Okklusalverschraubung, Aufzementieren, Steckverbindung oder Transversalverschraubung separat oder fachgemäss kombiniert benutzt werden.

## Claims

1. Arrangement for connecting a dental implant (**1**) or a manipulation implant (**7**) to a conical secondary part (**800**),
a) the implant (**1**,**7**) ending, on the top side of the implant head (**11,71**), in an implant shoulder (**14,74**) and a hollow implant cone (**12**) or a cylindrical bore (**75**) being provided in the implant head (**11,71**), from the base of which bore there extends an axial, blind-bore-like threaded bore (**13,72**);
b) the conical secondary part (**800**) has a threaded segment (**820**), which engages into the threaded bore (**13,72**), has a base pillar (**810**), which rests in the implant cone (**12**) or in the cylindrical bore (**75**) and has a conical pillar (**830**) which protrudes beyond the implant shoulder (**14,74**), characterised in that
c) a groove (**831**) present on the underside of the conical pillar (**830**) results in a shoulder part (**860**) with an annular face (**861**), which is of complementary configuration to the implant shoulder (**14,74**), runs towards the outer edge (**832**) of the conical pillar (**830**) and, from the inner edge (**15,75'**) of the implant shoulder (**14,74**) rests, in the form of a circular ring and partially, without gaps on the implant shoulder (**14,74**);
d) an impression cap (**300**) or crown cap (**500**) is provided, which at the bottom has a circular-ring-like mating shoulder (**301** or **501**), which is of complementary configuration to the implant shoulder (**14,74**) and rests without gaps on the remaining surface of the implant shoulder (**14,74**).

2. Connection arrangement according to claim 1, characterised in that the implant shoulder (**14,74**), and thus also the annular face (**861**) on the conical secondary part (**800**), adopts an angle of inclination to the horizontal which is not equal to 0°.

3. Connection arrangement according to claim 2, characterised in that the angle of inclination is 45°.

4. Connection arrangement according to one of claims 1 to 3, characterised in that
a) the conical secondary part (**800**) has a rotationally symmetrical configuration or is angled;
b) an axial and blind-bore-like threaded bore (**84**) extending from the conical-pillar shoulder (**850**) is provided in the conical pillar (**830**), which threaded bore serves to accommodate the threaded segment (**41,410** or **110**) of a positioning screw (**4**), an occlusal screw (**400**) or a plug-in anchor (**100**), and
c) a countersinking (**841**) for accommodating the collar of the shank segment (**120**) of the plug-in anchor (**100**) is present at the entry to the threaded bore (**840**).

5. Connection arrangement according to one of claims 1 to 4, characterised in that, for the additional centring of the conical secondary part (**800**), a centring sleeve (**9**) is inserted in the implant cone (**12**) or in the cylindrical bore (**75**).

6. Connection arrangement according to one of claims 1 to 5, characterised in that
a) it is used for taking impressions, producing the master model and building up and fixing the finished toothed crown (**Zk**) on the implant (**1**);
b) when building up the tooth crown (**Zk**), as an alternative to a prefabricated crown cap (**500**) an individually cast metal crown is provided, and
c) the connection methods of occlusal screwing, cementing on, a plug connection or transverse screwing are used separately or combined in a suitable manner, for fixing purposes.

## Revendications

1. Dispositif de connexion d'un implant dentaire (1) ou d'un implant de manipulation (7) à une partie secondaire conique (800), dans lequel
a) l'implant (1, 7) se termine au niveau de la tête de l'implant (11, 71) du côté supérieur par un épaulement d'implant (14, 74) et un cône d'implant creux (12) ou un alésage cylindrique (75) est prévu dans la tête de l'implant (11, 71), depuis le fond duquel s'étend un taraudage (13, 72) axial, en forme de trou borgne;
b) la partie secondaire conique (800) possède un segment fileté (820), qui s'engage dans le taraudage (13, 72), présente un socle de base (810), qui repose dans le cône d'implant (12) ou dans l'alésage cylindrique (75) et a un socle conique (830) dépassant l'épaulement d'implant (14, 74), caractérisé en ce que
c) une cannelure (831) prévue dans la face inférieure du socle conique (830) produit une partie d'épaulement (860) avec une surface annulaire (861), qui est complémentaire de celle de l'épaulement d'implant (14, 74), s'étend jusqu'à l'arête externe (832) du socle conique (830) et repose de manière continue depuis l'arête interne (15, 75') de l'épaulement d'implant (14, 74) en forme de couronne et partiellement sur l'épaulement d'implant (14, 74);
d) on prévoit une calotte d'impression (300) ou une calotte de couronne (500) qui présente à sa partie inférieure un contre-épaulement en forme de couronne (301 ou 501), qui a une forme complémentaire de celle de l'épaulement d'implant (14, 74), et qui repose de manière continue sur la surface restante de l'épaulement d'implant (14, 74).

2. Dispositif de connexion selon la revendication 1, caractérisé en ce que l'épaulement d'implant (14, 74) et donc également la surface annulaire (861) au niveau de la partie secondaire conique (800) font avec l'horizontale un angle d'inclinaison différent de 0°.

3. Dispositif de connexion selon la revendication 2, caractérisé en ce que l'angle d'inclinaison vaut 45°.

4. Dispositif de connexion selon l'une quelconque des revendications 1 à 3, caractérisé en ce que
a) la partie secondaire conique (800) présente une configuration à symétrie de révolution ou est inclinée;
b) un taraudage (840) axial et en forme de trou borgne est prévu dans le socle conique (830), s'étendant depuis l'épaulement du socle conique (850), et sert à recevoir le segment fileté (41, 410 ou 110) d'une vis de positionnement (4), d'une vis d'occlusion (400), ou d'un élément d'ancrage enfichable (100) et
c) à l'entrée du taraudage (840), il est prévu un chanfreinage (841) pour recevoir la base du segment de tige (120) de l'élément d'encrage enfichable (100).

5. Dispositif de connexion selon l'une quelconque des revendications 1 à 4, caractérisé en ce que l'on insère une douille de centrage (9) dans le cône d'implant (12) ou dans l'alésage cylindrique (75) en vue d'un centrage supplémentaire de la partie secondaire conique (800).

6. Dispositif de connexion selon l'une quelconque des revendications 1 à 5, caractérisé en ce que
a) celui-ci est utilisé pour la prise d'empreinte, la fabrication d'un modèle et la construction ainsi que la fixation de la couronne dentaire finie (Zk) sur l'implant (1);
b) on prévoit lors de la construction de la couronne dentaire (Zk), à la place d'une calotte de couronne (500) préfabriquée, en variante, une couronne métallique coulée individuellement et
c) pour la fixation, on utilise, de manière séparée ou combinée de manière appropriée, le vissage occlusif, la cimentation, la connexion par embrochage, ou le vissage transversal.
